Europäisches Patentamt

European Patent Office

Office européen des brevets

(11) Publication number: **0 281 337 B1**

# EUROPEAN PATENT SPECIFICATION

(45) Date of publication of patent specification: **21.07.93**  (51) Int. Cl.5: **G01N 21/43**, G01N 21/85, F02D 41/00

(21) Application number: **88301710.5**

(22) Date of filing: **26.02.88**

(54) **A detector device for mixing ratio for petrol and alcohol or the like.**

(30) Priority: **26.02.87 JP 43960/87**
**16.02.88 JP 33289/88**

(43) Date of publication of application:
**07.09.88 Bulletin 88/36**

(45) Publication of the grant of the patent:
**21.07.93 Bulletin 93/29**

(84) Designated Contracting States:
**DE GB NL**

(56) References cited:
**FR-A- 2 487 010**
**GB-A- 2 089 032**
**US-A- 3 299 770**
**US-A- 4 320 291**

**PATENT ABSTRACTS OF JAPAN vol. 12, no. 25 (P-659)(2872), 26 January 1988, & JP-A-62180244**

**PATENT ABSTRACTS OF JAPAN vol. 10, no. 229 (P-485)(2285), 8 August 1986; & JP-A-61065140**

(73) Proprietor: **NGK Spark Plug Co. Ltd.**
**No. 14-18, Takatsuji-cho Mizuho-ku**
**Nagoya-shi Aichi-ken 467(JP)**

(72) Inventor: **Miyata, Shigeru**
**14-Ban 18-Gou Takatsuji-cho**
**Mizuho-ku Nagoya-shi(JP)**
Inventor: **Matsubara, Yoshihiro**
**14-Ban 18-Gou Takatsuji-cho**
**Mizuho-ku Nagoya-shi(JP)**
Inventor: **Ohno, Kiyotaka**
**14-Ban 18-Gou Takatsuji-cho**
**Mizuho-ku Nagoya-shi(JP)**

(74) Representative: **Senior, Alan Murray et al**
**J.A. KEMP & CO 14 South Square Gray's Inn**
**London WC1R 5EU (GB)**

## Description

This invention relates to a detector device in which a mixing ratio such as, for example, gasoline and alcohol is optically measured, and adjusted for use in fuel of an internal combustion engine.

In an internal combustion engine for a motor vehicle, it has been suggested to apply a mixed liquid of gasoline and alcohol for a combustible fuel. In order to obtain a good engine output it is necessary to continuously detect a mixing ratio of the liquid so that an automatic combustion control unit may operate properly to control the quantity of liquid injected.

FR-2487610 shows a detector device with an optically permeable column, one end of which is made reflective. Light emitting and receiving elements are positioned adjacent the opposite end of the column from the reflection end. The preamble of claim 1 is based on this disclosure.

Therefore it is an object of this invention to provide a detector device which is capable of making an optically permeable column relatively compact, and to decrease the assembly processes contributing to saving cost.

It is another object of this invention to provide a detector device which is capable of directing only a required quantity of light beams to a photo diode, thus measuring a mixing ratio of the liquid with high accuracy.

According to one aspect of this invention, there is provided a detector device in contact with a mixture of gasoline and alcohol or the like for detecting a predetermined range of mixture ratios thereof comprising:

an optically permeable column, one end of which is coated with a light-reflective layer, a circumferential surface of said column being at least partially immersed in the mixture;

a light emitting diode and a photo diode each disposed adjacent the end of the column remote from said light-reflective layer and aligned along a diameter of said column;

light beams from said light emitting diode forming a light path such that said light beams pass through said column to be incident on and reflected from one of said circumferential surface and said light-reflective layer, so as to be incident on the other of said light reflective layer and said circumferential surface and reflected therefrom onto said photo diode, the light beams incident on said circumferential surface of said column at less than a critical angle being refracted to said liquid while the light beams incident on said circumferential surface at more than the critical angle being totally internally reflected, the critical angle depending on a mixture ratio of the liquid; characterised in that the diameter and length of the column are determined so that said light beams are reflected onto the photodiode at a predetermined range of angles between a first angle corresponding to the critical angle when said liquid mixture ratio is at the lower limit of the predetermined range of mixture ratios to be detected and a second angle corresponding to the critical angle when said liquid mixture ratio is at the upper limit of the predetermined range.

According to another aspect of the invention there is provided a method of making a device for detecting a predetermined range of mixture ratios of gasoline and alcohol or the like, comprising the steps of:

coating one end of an optically permeable column with a light reflective layer;

mounting a light-emitting diode and a photodiode adjacent the end of the column remote from the reflective layer, so that in use light beams from the light emitting diode pass through the column to be incident on and reflected from one of the circumferential surface of the column and the light reflective layer, are incident on the other of the light reflective layer and the circumferential surface and reflected therefrom onto the photodiode, the light beams incident on the circumferential surface of said column at less than a critical angle being refracted to the liquid and the light beams incident on the circumferential surface at more than the critical angle being totally internally reflected, the critical angle depending on the mixture ratio of the liquid; characterised by the steps of determining the diameter and length of the column so that said light beams are reflected onto the photodiode in a predetermined range of angles between a first angle corresponding to the critical angle when the liquid mixture ratio is at the lower limit of a correspondingly predetermined range of mixture ratios to be detected and a second angle corresponding to the critical angle when the liquid mixture ratio is at the upper limit of the predetermined range.

The invention will be further described by way of non-limitative example with reference to the accompanying drawings in which:

Fig.1 is a longitudinal cross sectional view of a detector device;

Fig.2 is a latitudinal view along I-I line of Fig.1;

Figs.3 through 6 are views shown for the purpose of elucidating a principal;

Fig.7 is a systematic view of an internal combustion engine for use in a motor vehicle;

Fig.8 is a wiring diagram of a compensation circuit;

Fig.9 is a graph showing a relationship between an output (V) of a photo diode and its ambient temperature (T);

Fig.10 is a graph showing a relationship between an output (V) of a light emitting diode and its ambient temperature (T);

Fig. 11 is a graph showing a relationship between a voltage (V) applied to second amplifier and its ambient temperature (T); and

Fig.12 is a view corresponding to Fig.1;

Fig.13 is a view corresponding to Fig.2; and

Fig.14 is a view corresponding to Fig.1 according to other embodiment of this invention.

In reference with accompanied drawings, embodiments of this invention are described which is associated with an internal combustion engine for a motor vehicle.

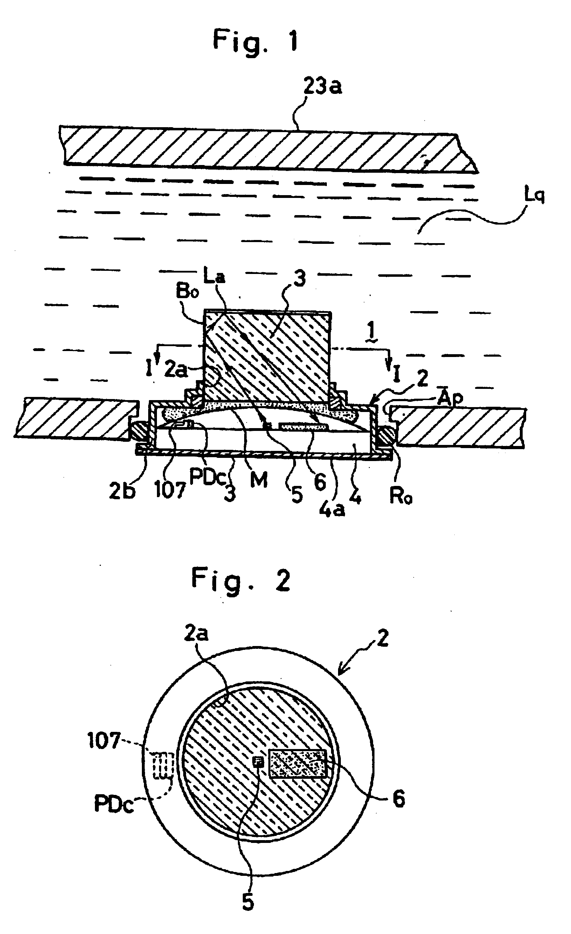

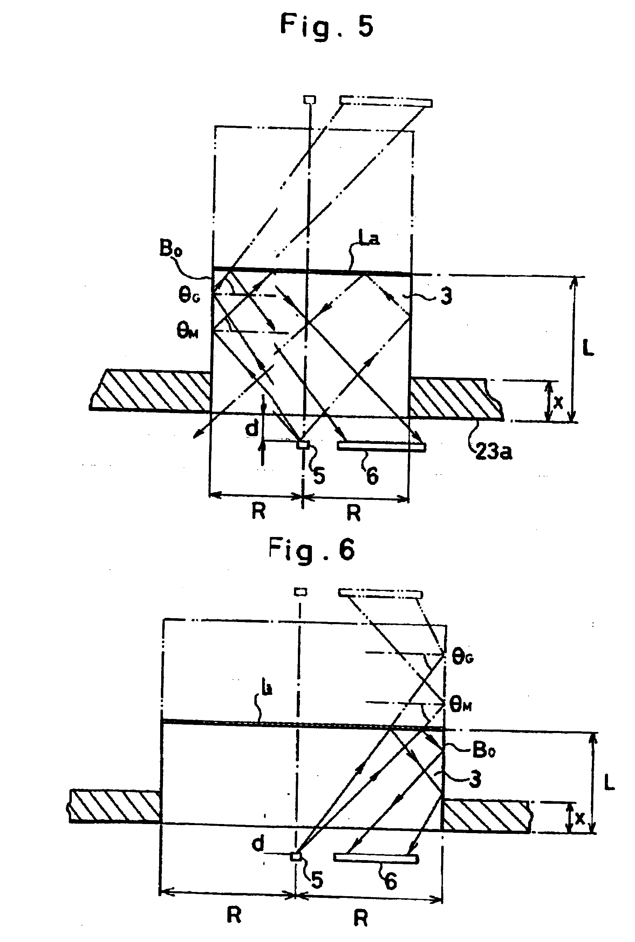

Referring to Figs.1 and 2 of the drawings, numeral 1 designates a detector device according to this invention which is placed into an intermediate pipe 23a between a fuel reservoir 20 and a pressure regulator 23 as elucidated hereafter in Fig.5. The pipe 23 has a aperture (Ap) at its circumferential wall to communicate the innerside space and outside atmosphere. Inserted into the aperture (Ap), is a stepped cylindrical casing 2 liquid sealed by means of O-ring (R0). Connected to a diameter-reduced opening 2a of the casing 2, is a column-shaped flint glass 3 liquid tightly disposed as an optical permeable means, outer surface of which is in direct contact with a mixing liquid ofgasoline and alcohol (Lq) flowing through the pipe 23a. The column 3 has a specular layer (La) coated at its one end positioned opposite to the casing 2 to serve as light reflecting means.

In parallel relationship with the flint glass 3, is a pedestal 4 placed, on which a light emitting diode 5 and a photo diode 6 are arranged in coplanar relationship. In addition, a temperature compensation light emitting diode (PDc) is placed on the pedestal 4 by means of a support 107 to position remote from the light emiting diode 5. The light emitting diode 5 and the photo diodes 6. (PDc) are moulded in integral with a transparent epoxy resin or silicone (M) to fill a space between the glass 3 and the pedestal 4, except for a remaining pneumatic layer. In an opposite side to the column 3, is a base plate 4a secured to a diameter-increased opening 2b of the casings 2 by means of welding or the like.

In this situation, light beams from the light emitting diode 5 permeates into the column 3 through its one end to be incident on a boundary (Bo) between the outer surface of the column 3 and the mixing liquid (Lq), the light beams incident on the boundary (Bo) at less than a critical angle being totally refracted, while the light beams incident on the boundary (Bo) at more than a critical angle being totally reflected, the critical angle depending on a mixing degree of the mixing liquid (Lq). The photo diode 6 is adapted to receive the light beams reflected at the boundary (Bo), or at the specular layer(La) to go back through the column 3 to fall thereon so as to generate an output in accordance with the light intensity received.

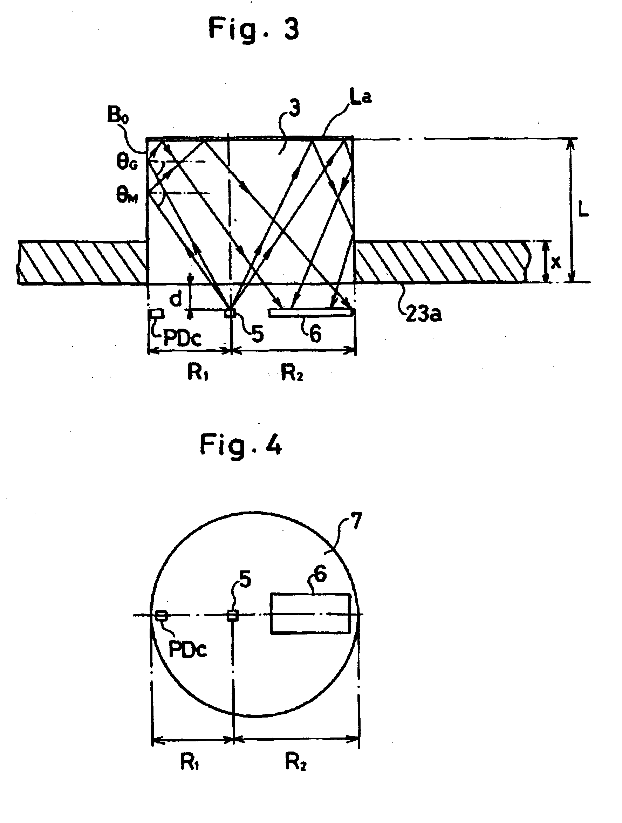

In determining a lengthwise and diametrical dimensions of the column 3, a principle incorporated into this invention is shown in Figs.3 and 4. As seen in Fig.3, the light beams from the diode 5 permeates into the column 3 through one end to reflect at the boundary (Bo) only once with an angle of more than a critical angle ($\theta$M), and reach at the specular layer (La) so as to reflect back through the column 3 to the photo diode 6, when a mining ratio of the liquid (Lq) is such as, for example, 0:10 (alcohol only).

Meanwhile, the light beams from the diode 5 permeates into the column 3 through one end to reflect at the boundary (Bo) only once with an angl of more than a critical angle ($\theta$G), and reach at the spcular layer (La) so as to reflect back through the column 3 o the photo diode 6, when a mixing ratio of the liquid (Lq is such as, for example, 100:0 (gasoline only).

Under this condition, denotations R1 and R2 are distances each measured from the diode 5 to the outer peripheral of the column 3 along the diametrical direction. Denotations L and x are a lengthwise dimension of the column 3 and a thickness dimension of the pipe 3a, with denotation d as a distance between lower end of the column 3 and the light emitting diode 6.

Calculating from the geometrial relationship, $R1\tan\theta M \geq d + x$   $L \geq R1\tan\theta G - d$  are obtained.These two representations provides R1 and L with cocrete values. In connection with R2, relationship $(2L + 1 - x)/\tan\theta G \geq R2 \geq (L + d)/\tan\theta M$ is obtained as elucidated hereafter, allowing to provide R2 with a concrete value.

Further, Figs. 5 and 6 show exmples in which the light emitting diode 5 is placed at a cener of the column 3, the radius of which is depicted by R. in Fig.5, the light beams permeated into the colum 3, firstly reflected at the boundary (Bo), and reached at the specular layer (La). Representations $R\tan\theta M \geq (x + d)$ and $(L + d) \geq R\tan\theta G$ are obtained. From the two representations, $R \geq (x + d)/\tan\theta M \geq L \geq R\tan\theta G - d$ are obtained, providing R, L with concrete values.

In Fig.6, the light beams permeated into the column 3, firstly reached at the specular layer (La), and reflected at the boundary (Bo). This case allows to introduce the following representations. That is, $(2L + d - x) \geq R\tan\theta G$   $R\tan\theta M \geq (L + d)$ , thus leading to a relationship of $(2L + d - x)/\tan\theta G \geq R \geq (L + d)/\tan\theta M$.

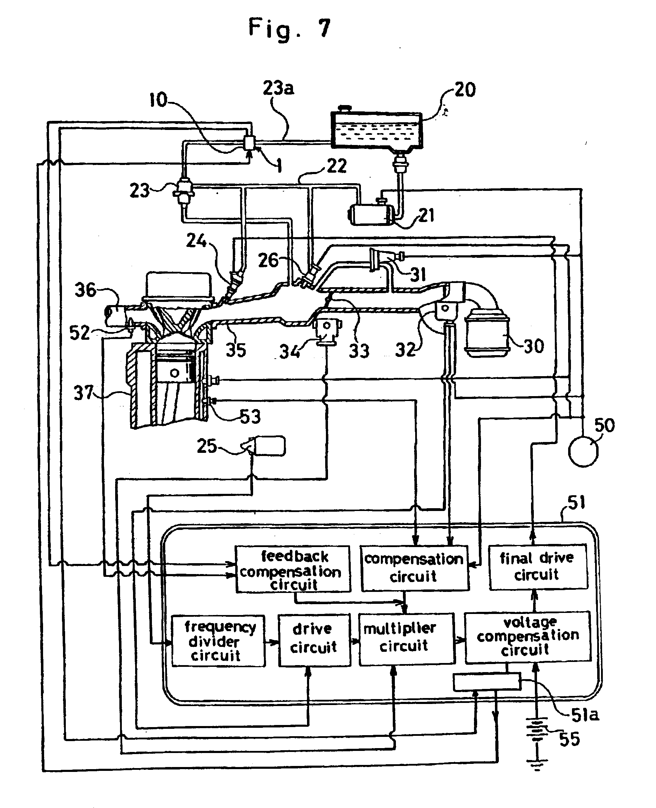

Now Fig. 7 shows a control system in which a detector device according to this invention is associated with an internal combustion engine for a motor vehicle. In Fig. 7, numeral 37 designates an engine cylinder, numeral 50 being an ignition key, numeral 51 being a control circuit, numeral 55 a battery cell serving as a power source, numeral 20 a fuel reservoir. Numeral 21 designates a fuel pump, numeral 23 being a pressure regulator which is introduced from the fuel reservoir 20 by way of the intermediate pipe 23a which the detector device 1 is mounted. Numeral 24 shows an injector, numeral 26 being a cold start injector, numeral 25 being an ignition coil, numeral 30 an air cleaner, numeral 31 an air valve, numeral 32 an air flow meter, numeral 33 a throttle valve, numeral 34 a position sensor for the throttle valve 33, numeral 35 an inake pipe, numeral 36 an exhaust pipe, numeral 52 a sensor for detecting air-fuel ratio of the fuel, numeral 53 a temperature sensor for a water cooler circulating in a jacket of the engine cylinder 37.

In operation, an actuation of the igition key 50 allows to activate the engine, and at the same time, supplying a power source to the control ciruit 51. In combination with the activated control circit 51, the mixing liquid fuel of gasoline and alcohol n the reservior 20 is supplied to the injector 24 through afuel pipe 22 by means of fuel pump 21. At this time, the inector 24 works to supply the fuel to the intake pipe 35 atthe most appropriately quantity of injection calculaed to the operating condition of the engine.

In the meantime, the control circuit51 impresses a voltage across the light emitting diode 6 to emanate light beams which passes through the synthetic resin layer (M) and the glass 3 to reach at the boundary (Bo) between outer surface of the glass 3 and the mixing liquid fuel (Lq). The light beams reached at the boundary (Bo) with an incident angle as more than a critical angle, reflect to pass back the glass 3 and the resin layer (M) so as to fall on the photo diode 6 which produces an output supplied to the control circuit 50 through an input arrangement 51a.

In this situation, variation of mixing ratio of the fuel liquid changes its refraction index to cause change of the critical angle when the light beams permeate through the glass 3 to reflect at the boundary (Bo). The change of the critical angle influences on the quantity of the light beams falling on the photo diode 6 to change the output produced therefrom. The relationship between the mixing ratio of the liquid (Lq) and the quantity of the light beams fell on the photo diode 6, are previously obtained as data from the change of the refraction index of the mixing liquid to be stored by the control circuit 51.

In so doing, the output from the photo diode 6 allows the control circuit 51 to calculate the most appropriate quantity of injection fuel so as to maintain a good output of the engine.

With the structure thus described, the light emitting diode 5 and the photo diode 6 is located at the position of identical side, so that thickness dimension of the detector device 1 is reduced. The dimension of the column 3 is such to mininize the amount of the light beams absorbed within the column 3, and preventing unnecessary light beams from falling on the photo diode 6 since the light emitting diode positions to avoid reflection light beams, thus ensuring to measure a mixing ratio with high accuracy. The casing 2 required to encase the diodes 5,6 is a unitary one to reduce the number of assembly processes so as to facilitate assembly, conducive to an improved production.

Now, the temperature compensation (PDc) is in the shape of a rectangular chip, and located opposite to the light emitting diode 5 to be in the neighborhood of the photo diode 6 as mentioned herebefore. The location of the diode (PDc) is such that the diode (PDc) receives the light beams only incident on the boundary at more than a critical angle so as to always maintain a constant quantity of the light beams received, regardless of the mixing ratio of the liquid (Lq).

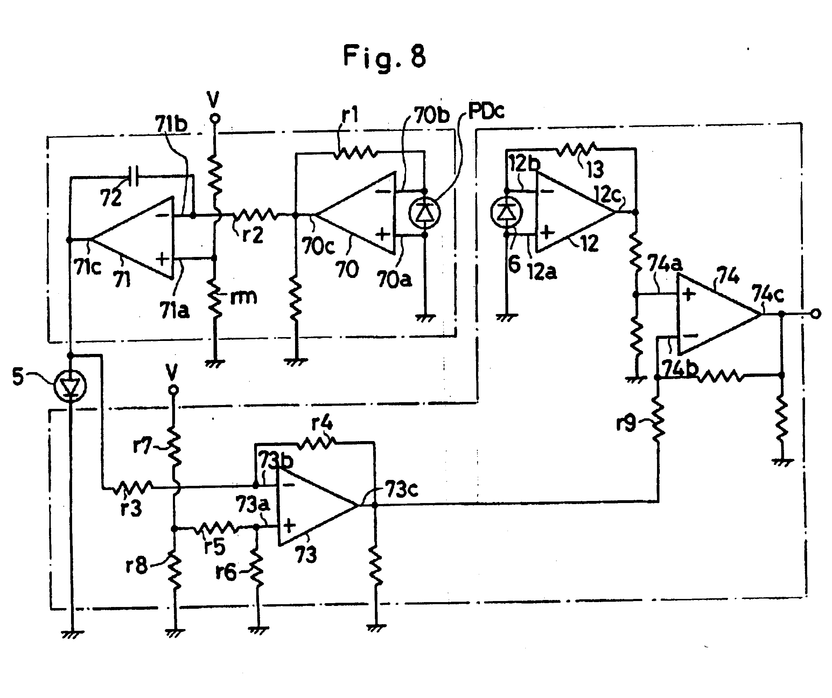

The temperature compensation photo diode (PDc) is incorporated into an electronic circuit shown n Fig. 8. The diode (PDc) is connected across positive and negative terminals 70a, 70b of first operational amplifier 70. A common point of the negative terminal 70b and the diode (PDc) is connected to an output terminal 70c of the amplifier 70 by way of an electrical resistance r1. The output terminal 70c is connected to a negative terminal 71b of second amplifier 71 through an electrical resistance r2. The amplifier 71 has a positive terminal 71a grounded through a suitable resistance (rm). Across the negative terminal 71b and the output terminal 71c is a condenser 72 connected to prevent an adverse hunting action. A common point of the condenser 72 and the output terminal 71c is grounded by way of the light emitting diode 5. Further, a common point of the output terminal 71c and the light emitting diode 5 is connected to a negative terminal 73b of third operational amplifier 73 through an electrical resistance r3, the amplifier 73 connecting a negative terminal 73b to an output terminal 73c through an electrical resistance r4. To the positive terminal 73a, a predetermined input voltage (V) proportionately divided by resistances r7 and r8, is supplied through a resistance r5. The ratio of resistances r3 and r4 is predetermined to be equivalent to that of the resistances r5 and r6. A common point of the resistance r4 and the positive terminal 73c is connected to a negative terminal 74b of fourth operational amplifier 74. The amplifier 74 serves as an calculator which, by way of its positive terminal 74a, receives an output from an operational amplifier 12 to which the photo diode 6 is connected, and at the same time, receiving an output from the third amplifier 73 by way of the negative terminal 74b. The terminal 74 produces an output, the value of which is equivalent to the output difference between the amplifiers 12 and 73.

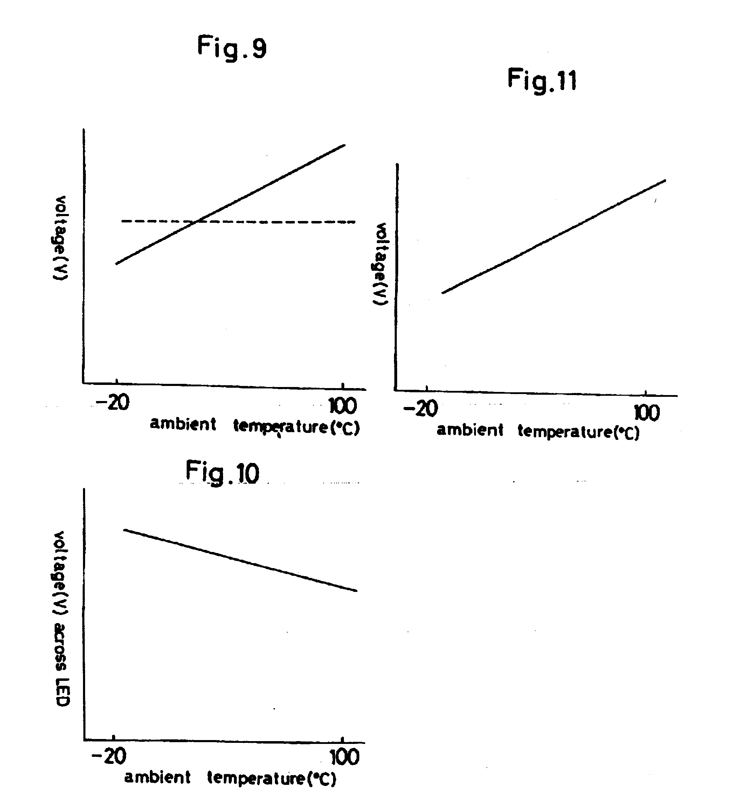

Under a constant voltage at the positive terminal 71a, the amplifier 71 works to control a quantity of current supplied to the light emitting diode 5 so as to hold the diode (PDc) at a predetermined output level, and leading to a uniform output of the photo diode 6 unless the liquid (Lq) of gasoline and alcohol changes its refraction index. The refraction of the liquid, however, changes in accordance with the ambient temperature so that the relationship between temperature (T) and output (V) of the photo diode 6 is as seen at solid line in Fig.9. The relationship between the ambient temperature (T) and voltage drop (V across the terminals of the light emitting diode 5, is as seen in Fig. 10, so that the voltage drop (V) decreases with the increase of the ambient temperature (T).

In so doing, the voltage impressed acros the teriminals of the light emitting diode 5, is forwarded to the third operational amplifier 73 through the positive terminal 73a, so that the amplifier 73 allows the output terminal 73c to produce voltage (V) which progressively steps up with the increase of the ambient temperature as depicted in Fig.11. The voltage (V) thus changing, is applied to the light emitting diode 5 through the output terminal 71c of the amplifier 71 to act the diode 5 to decrease its light emitting degree. This leads to decreasing the output of the photo diode 6 so that the output of the photo diode 6 is maintained substantially at a certain level irrespective of the ambient temperature as seen by broken lines in Fig.9.

In addition, the light emitting diode 5 deteriorates with a long period of use, in such a degree that the light intensity reduces by a few percent with a thousand operating hours, and reducing by ten or twenty percent wit ten thousand operating hours. The quantity of the light beams which the temperature compensation photo diode (PDc) receives, reduces to lower the output, decreasing the output of the first operational amplifier 70. The decreased output of the first amplifier 70 is applied to the negative terminal 71b of the second operational amplifier 71 to be amplified. The amplified output is forwarded through the output terminal 71c to apply it across the light emitting diode 5 to compensate for the loss of the light emitting quantity.

With a long period of use, deposit appears on the surface of the glass 3 to cloud the glass, absorbing the light beams from the diode 5 so as to reduce the quantity of the light beams which the photo diode (PDc) receives. The the light beams lost by the absorption, is compensated in the same manner as the above case in which the light emitting diode 5 is deteriorated.

It is appreciated that a light repellent means may be either a metallic foil layer, or a plastic layer having a mirrored surface, otherwise a light repellent means may be provided with the end of the column by means of spattering.

Further, it is noted that instead of the flint glass 3, a reinforced glass or a corrosion resistant plastics may be employed.

Furthermore, it is appreciated that a mixing liquid fuel, is not confined only to gasoline and alcohol.

In addition, it is noted that the detector device according to this invention may be incorporated into a monitor device in which concentration of sugared water and saline water is being continuously detected. This may has a significance particularly in the circle of food industry.

Moreover, it is noted that the light beams from the diode 5 may reflect only once at the boundary (Bo) with an incident angle as more than a critical angle when a mixing ratio of alcohol is between 30 percent and 60 percent at the time of determining a diametrical and lengthwise dimensions of the column 3.

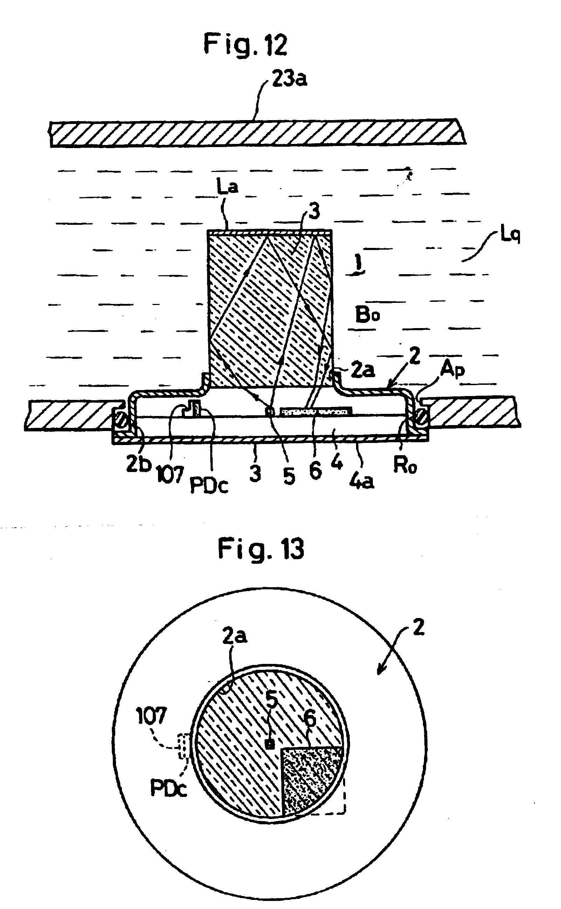

Additionally, it is noted that the epoxy resin layer (M) and the relationship determined in Figs.3 through 6 may be cancelled so as to instead provide a detector device as shown in Figs.12 and 13.

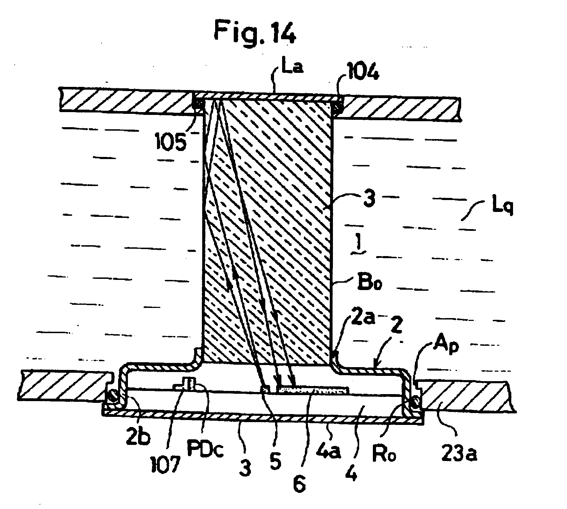

Further, Fig.14 shows other embodiment of this invention in which the column 3 extends at its length to fully traverse the diameter of the pipe 23a with the background as the same in that of Figs. 12 and 13.

That is, in registration with the aperture (Ap), the pipe 23a is provided with a hole 104 into which the column 3 extends its upper end, and liquid-tightly sealed by means of an O-ring 105. To the upper end of the column 3, the specular layer (La) is applied by means of such as, for example, an adhesive.

## Claims

1. A detector device in contact with a mixture of gasoline and alcohol or the like for detecting a predetermined range of mixture ratios thereof comprising:
   an optically permeable column, one end of which is coated with a light-reflective layer, a circumferential surface of said column being at least partially immersed in the mixture;
   a light emitting diode and a photo diode each disposed adjacent the end of the column remote from said light-reflective layer and aligned along a diameter of said column;

light beams from said light emitting diode forming a light path such that said light beams pass through said column to be incident on and reflected from one of said circumferential surface and said light-reflective layer, so as to be incident on the other of said light reflective layer and said circumferential surface and reflected therefrom onto said photo diode, the light beams incident on said circumferential surface of said column at less than a critical angle being refracted to said liquid while the light beams incident on said circumferential surface at more than the critical angle being totally internally reflected, the critical angle depending on a mixture ratio of the liquid; characterised in that the diameter and length of the column are determined so that said light beams are reflected onto the photodiode at a predetermined range of angles between a first angle corresponding to the critical angle when said liquid mixture ratio is at the lower limit of the predetermined range of mixture ratios to be detected and a second angle corresponding to the critical angle when said liquid mixture ratio is at the upper limit of the predetermined range.

2. A device according to claim 1, in which said light emitting diode is located to align with a central axis of said column.

3. A device according to claim 1 or 2, in which said optically permeable column is made of flint glass.

4. A device according to any preceding claim, wherein some light beams are reflected from the circumferential surface first, and others are reflected by the reflective end of the column first.

5. A device according to any preceding claim, wherein the column is substantially rectangular in a cross-sectional plane parallel to the column axis and the photodiode and light emitting diode are aligned substantially parallel to the reflection end of the column.

6. A device according to claim 5, wherein the dimensions of the column are arranged according to the formulae:

$$(2L + d - x)/\tan\theta_G \geq R_2 \geq (L + d)/\tan\theta_m$$
$$(d + x)/\tan\theta_m \leq R_1 \leq (L + d)/\tan\theta_G$$

where

$R_1$ =      the least distance from the light emitting diode to the circumferential surface of the column

$R_2$ =      the greatest distance from the light emitting diode to the circumferential surface of the column

$d$ =      the distance from the diodes to the column,

$x$ =      the distance from the end of the column adjacent to the diode to the boundary at which the circumferential surface of the column is immersed

$\theta_m$ =      the critical angle of incidence at the lower end of the predetermined range of angles, and

$\theta_g$ =      the critical angle of incidence at the upper end of the predetermined range of angles.

7. A method of making a device for detecting a predetermined range of mixture ratios of gasoline and alcohol or the like, comprising the steps of:

coating one end of an optically permeable column with a light reflective layer;

mounting a light-emitting diode and a photodiode adjacent the end of the column remote from the reflective layer, so that in use light beams from the light emitting diode pass through the column to be incident on and reflected from one of the circumferential surface of the column and the light reflective layer, are incident on the other of the light reflective layer and the circumferential surface and reflected therefrom onto the photodiode, the light beams incident on the circumferential surface of said column at less than a critical angle being refracted to the liquid and the light beams incident on the circumferential surface at more than the critical angle being totally internally reflected, the critical angle depending on the mixture ratio of the liquid; characterised by the steps of determining the diameter and length of the column so that said light beams are reflected onto the photodiode in a predetermined range of angles between a first angle corresponding to the critical angle when the liquid mixture ratio is at the lower limit of a corresponding predetermined range of mixture ratios to be detected and a second angle corresponding to the critical angle when the liquid mixture ratio is at the upper limit of the predetermined range.

8. A method according to claim 7, wherein some light beams are reflected from the circumferential surface first, and others are reflected by the reflective end of the column first.

9. A method according to claim 7 or 8, wherein the column is substantially rectangular in a cross-sectional plane parallel to the column axis and the photodiode and light emitting diode are aligned substantially parallel to the reflection end of the column.

10. A method according to claim 9, wherein the dimensions of the column are arranged according to the formulae:

$$(2L + d - x)/\tan\theta_G \geqq R_2 \geqq (L + d)/\tan\theta_m$$
$$(d + x)/\tan\theta_m \leqq R_1 \leqq (L + d)/\tan\theta_G$$

where

$R_1$ = the least distance from the light emitting diode to the circumferential surface of the column

$R_2$ = the greatest distance from the light emitting diode to the circumferential surface of the column

$d$ = the distance from the diodes to the column,

$x$ = the distance from the end of the column adjacent to the diode to the boundary at which the circumferential surface of the column is immersed

$\theta_m$ = the critical angle of incidence at the lower end of the predetermined range of angles, and

$\theta_g$ = the critical angle of incidence at the upper end of the predetermined range of angles.

**Patentansprüche**

1. Bestimmungsvorrichtung, die mit einer Mischung aus Benzin und Alkohol oder dergleichen in Berührung steht, zur Bestimmung eines vorherbestimmten Bereiches des Mischungsverhältnisses dieser Stoffe mit
einer optisch durchlässigen Säule, deren eines Ende mit einer lichtreflektierenden Schicht beschichtet ist, einer umlaufenden Oberfläche der Säule, die zumindest teilweise in die Mischung eintaucht,
einer lichtemittierenden Diode und einer Fotodiode, wobei jede nahe dem Ende der Säule entfernt von der lichtreflektierenden Schicht entlang eines Durchmessers durch die Säule angeordnet ist,
wobei die Strahlen aus der lichtemittierenden Diode einen Strahlengang derart bilden, daß die Strahlen durch die Säule treten, wobei sie entweder auf die umgebende Oberfläche oder die lichtreflektierende Schicht auftreffen und so reflektiert werden, daß sie jeweils auf die lichtreflektierende Schicht oder die umgebende Oberfläche auftreffen und von dort dann in Richtung auf die Fotodiode reflektiert werden, wobei die Strahlen, die auf die umlaufende Oberfläche mit einem Winkel auftreffen, der kleiner als ein kritischer Winkel ist, zu der Flüssigkeit hin gebrochen werden, während die Strahlen, die auf die umlaufende Oberfläche mit einem Winkel auftreffen, der größer als ein kritischer Winkel ist, im Inneren vollständig reflektiert werden, wobei der kritische Winkel von dem Mischungsverhältnis der Flüssigkeit abhängt,
**dadurch gekennzeichnet**,
daß der Durchmesser und die Länge der Säule derart bemessen sind, daß die Strahlen an der Fotodiode innerhalb eines vorherbestimmten Winkelbereiches zwischen einem ersten Winkel reflektiert werden, der dem kritischen Winkel entspricht, wenn das Flüssigkeitsmischungsverhältnis an einem unteren Grenzwert des vorherbestimmten Mischungsverhältnisbereiches, der untersucht werden soll, angesiedelt ist, und einem zweiten Winkel, der dem kritischen Winkel entspricht, wenn das Flüssigkeitsmischungsverhältnis an einer Obergrenze des vorherbestimmten Bereiches angelangt ist.

2. Vorrichtung nach Anspruch 1, in welcher die lichtemittierende Diode derart angeordnet ist, daß sie mit einer zentralen Achse der Säule fluchtet.

3. Vorrichtung nach Anspruch 1 oder 2, in welcher die optisch durchlässige Säule aus Bleiglas besteht.

4. Vorrichtung nach einem der vorangehenden Ansprüche, in welchem einige Strahlen von der umgebenden Oberfläche zuerst reflektiert werden und in welcher andere Strahlen von dem reflektierenden Ende der Säule zuerst reflektiert werden.

5. Vorrichtung nach einem der vorangehenden Ansprüche, in welchem die Säule im wesentlichen rechtwinklig in einer Querschnittsebene parallel zur Säulenachse ist und in welcher die Fotodiode und die lichtemittierende Diode im wesentlichen parallel zum reflektierenden Ende der Säule angeordnet sind.

6. Vorrichtung nach Anspruch 5, in welcher die Säule entsprechend folgender Formel dimensioniert ist:

$$(2L + d - x)/\tan\theta_G \geqq R_2 \geqq (L + d)/\tan\theta_m$$
$$(d + x)/\tan\theta_m \leqq R_1 \leqq (L + d)/\tan\theta_G$$

in welcher

R₁ → $R_1$ = der kleinste Abstand von der lichtemittierenden Diode zur umlaufenden Oberfläche der Säule,

$R_2$ = der größe Abstand von der lichtemittierenden Diode zur umlaufenden Oberfläche der Säule,

d = Abstand von den Dioden zu der Säule,

x = Abstand von dem Ende der Säule nahe der Diode zu der Grenzschicht, in welcher die umlaufende Oberfläche der Säule eingetaucht ist,

$\theta_m$ = kritischer Einfallswinkel am unteren Ende des vorherbestimmten Winkelbereiches und

$\theta_g$ = kritischer Einfallswinkel am oberen Ende des vorherbestimmten Winkelbereichs.

7. Verfahren zur Herstellung einer Vorrichtung zum Bestimmen eines vorherbestimmten Bereichs von Mischungsverhältnissen von Benzin und Alkohol oder dergleichen mit folgenden Schritten:

Beschichten eines Endes einer optisch durchgängigen Säule mit einer lichtreflektierenden Schicht;

Montage einer lichtemittierenden Diode und einer Fotodiode nahe eines Endes der Säule entfernt von der reflektierenden Schicht, so daß beim Gebrauch die Strahlen aus der lichtemittierenden Diode so durch die Säule treten, daß sie entweder auf die umgebende Oberfläche der Säule oder die lichtreflektierende Schicht auftreffen und so reflektiert werden, daß sie jeweils auf die lichtreflektierende Schicht oder die umgebende Oberfläche auftreten und von dort dann in Richtung auf die Fotodiode reflektiert werden, wobei die Strahlen, die auf die umlaufende Oberfläche mit einem Winkel auftreffen, der kleiner als ein kritischer Winkel ist, zu der Flüssigkeit hin gebrochen werden, während die Strahlen, die auf die umlaufende Oberfläche mit einem Winkel auftreffen, der größer als ein kritischer Winkel ist, im Inneren vollständig reflektiert werden, wobei der kritische Winkel von dem Mischungsverhältnis der Flüssigkeit abhängt, gekennzeichnet durch folgende Schritte: Bestimmen des Durchmessers und der Länge der Säule derart, daß die Strahlen an der Fotodiode in einem vorherbestimmten Winkelbereich zwischen einem ersten Winkel reflektiert werden, der einem kritischen Winkel entspricht, wenn das Flüssigkeitsmischungsverhältnis an dem unteren Grenzwert des entsprechend vorherbestimmten Mischungsverhältnisses, das bestimmt werden soll, liegt und einem zweiten Winkel entsprechend einem kritischen Winkel entspricht, wenn das Flüssigkeitsmischungsverhältnis an einem oberen Grenzwert des vorherbestimmten Bereiches liegt.

8. Verfahren nach Anspruch 7, in welchem einige Strahlen zuerst von der umlaufenden Oberfläche reflektiert werden und andere Strahlen zuerst von dem reflektierenden Ende der Säule reflektiert werden.

9. Verfahren nach Anspruch 7 oder 8, in welchem die Säule im wesentlichen rechtwinklig in einer Querschnittsebene parallel zur Säulenachse ist und in welche die Fotodiode und die lichtemittierende Diode im wesentlichen parallel zum reflektierenden Ende der Säule angeordnet sind.

10. Verfahren nach Anspruch 9, in welchem die Säule entsprechend der folgenden Formeln dimensioniert wird:

$$(2L + d - x)/\tan\theta_G \geq R_2 \geq (L + d)/\tan\theta_m$$
$$(d + x)/\tan\theta_m \leq R_1 \leq (L + d)/\tan\theta_G$$

wobei

$R_1$ = der kleinste Abstand von der lichtemittierenden Diode zur umlaufenden Oberfläche der Säule,

$R_2$ = der größe Abstand von der lichtemittierenden Diode zur umlaufenden Oberfläche der Säule,

d = Abstand von den Dioden zu der Säule,

x = Abstand von dem Ende der Säule nahe der Diode zu der Grenzschicht, in welcher die umlaufende Oberfläche der Säule eingetaucht ist,

$\theta_m$ = kritischer Einfallswinkel am unteren Ende des vorherbestimmten Winkelbereiches und

$\theta_g$ = kritischer Einfallswinkel am oberen Ende des vorherbestimmten Winkelbereichs.

**Revendications**

1. Dispositif de détection au contact d'un mélange d'essence et d'alcool ou autre pour détecter une gamme prédéterminée de rapports de mélange de ceux-ci, comprenant :

une colonne optiquement perméable, dont une extrémité est enduite d'une couche photoréfléchissante, une surface périphérique de ladite colonne étant au moins partiellement plongée dans le mélange;

une diode électroluminescente et une photodiode disposées chacune au voisinage immédiat de l'extrémité de la colonne éloignée de ladite couche photoréfléchissante et alignées sur un diamètre de ladite colonne;

des rayons lumineux issus de ladite diode électroluminescente formant un parcours lumineux tel que lesdits rayons lumineux passent par ladite colonne pour frapper et être réfléchis par l'une de ladite surface périphérique et de ladite couche photoréfléchissante de façon à frapper l'autre de ladite couche photoréfléchissante et de ladite couche périphérique et à être réfléchis depuis celle-ci sur ladite photodiode, les rayons lumineux qui frappent ladite surface périphérique de ladite colonne selon un angle inférieur à un angle critique étant réfractés dans ledit liquide tandis que les rayons lumineux qui frappent ladite surface périphérique selon un angle supérieur à l'angle critique sont réfléchis d'une manière totalement interne, l'angle critique dépendant du rapport de mélange du liquide; caractérisé en ce que le diamètre et la longueur de la colonne sont déterminés de façon que lesdits rayons lumineux soient réfléchis sur la photodiode selon une gamme d'angles prédéterminée entre un premier angle correspondant à l'angle critique lorsque ledit rapport de mélange du liquide est à la limite inférieure de la gamme prédéterminée de rapports de mélange à détecter et un second angle correspondant à l'angle critique lorsque ledit rapport de mélange du liquide est à la limite supérieure de la gamme prédéterminée.

2. Dispositif selon la revendication 1, dans lequel ladite diode électroluminescente est disposée pour être alignée avec l'axe central de ladite colonne.

3. Dispositif selon la revendication 1 ou 2, dans lequel ladite colonne optiquement perméable est en flint-glass.

4. Dispositif selon l'une quelconque des revendications précédentes, dans lequel certains rayons lumineux sont réfléchis d'abord depuis la surface périphérique, et d'autres sont réfléchis d'abord depuis l'extrémité réfléchissante de la colonne.

5. Dispositif selon l'une quelconque des revendications précédentes, dans lequel la colonne a une section transversale sensiblement rectangulaire dans un plan parallèle à l'axe de la colonne, et la photodiode et la diode électroluminescente sont alignées sensiblement parallèlement à l'extrémité réfléchissante de la colonne.

6. Dispositif selon la revendication 5, dans lequel les dimensions de la colonne sont conçues

selon les formules:

$$(2L + d - x)/tg\theta_G \geq R_2 \geq (L + d)/tg\theta_m$$
$$(d + x)/tg\theta_m \leq R_1 \leq (L + d)/tg\theta_G$$

où $R_1$ est la plus petite distance entre la diode électroluminescente et la surface périphérique de la colonne,

$R_2$ est la plus grande distance entre la diode électroluminescente et la surface périphérique de la colonne

d est la distance entre les diodes et la colonne,

x est la distance entre l'extrémité de la colonne au voisinage immédiat de la diode et la limite à laquelle est plongée la surface périphérique de la colonne,

$\theta_m$ est l'angle d'incidence critique à l'extrémité inférieure de la gamme d'angles prédéterminée, et

$\theta_g$ est l'angle d'incidence critique à l'extrémité supérieure de la gamme d'angles prédéterminée.

7. Procédé pour réaliser un dispositif de détection d'une gamme prédéterminée de rapports de mélange d'essence et d'alcool ou autre, comprenant les étapes consistant à:

appliquer une couche photoréfléchissante sur une extrémité d'une colonne optiquement perméable;

monter une diode électroluminescente et une photodiode au voisinage immédiat de l'extrémité de la colonne éloignée de la couche photoréfléchissante, de façon que, en service, des rayons lumineux issus de la diode électroluminescente passent par la colonne pour frapper et être réfléchis par l'une de la surface périphérique de la colonne et de la couche photoréfléchissante, frappent l'autre de la couche photoréfléchissante et de la surface périphérique et soient réfléchis depuis celle-ci sur la photodiode, les rayons lumineux qui frappent la surface périphérique de ladite colonne selon un angle inférieur à un angle critique étant réfractés dans le liquide et les rayons lumineux qui frappent la surface périphérique selon un angle supérieur à l'angle critique étant réfléchis d'une manière totalement interne, l'angle critique dépendant du rapport de mélange du liquide; caractérisé par les étapes consistant à déterminer le diamètre et la longueur de la colonne de façon que lesdits rayons lumineux soient réfléchis sur la photodiode selon une gamme d'angles prédéterminée entre un premier angle correspondant à l'angle critique lorsque le rapport de mélange du liquide est à la limite inférieure d'une gamme prédéterminée correspondante de rapports de mélange à détecter et un second angle correspondant à l'angle cri-tique lorsque le rapport de mélange du liquide est à la limite supérieure de la gamme prédéterminée.

8. Procédé selon la revendication 7, dans lequel certains rayons lumineux sont réfléchis d'abord depuis la surface périphérique, et d'autres sont réfléchis d'abord par l'extrémité réfléchissante de la colonne.

9. Procédé selon la revendication 7 ou 8, dans lequel la colonne a une section transversale rectangulaire dans un plan parallèle à l'axe de la colonne, et la photodiode et la diode électro-luminescente sont alignées sensiblement pa-rallèlement à l'extrémité réfléchissante de la colonne.

10. Procédé selon la revendication 9, dans lequel les dimensions de la colonne sont conçues selon les formules:

$$(2L + d - x)/tg\theta_G \geq R_2 \geq (L + d)/tg\theta_m$$
$$(d + x)/tg\theta_m \leq R_1 \leq (L + d)/tg\theta_G$$

où $R_1$ est la plus petite distance entre la diode électroluminescente et la surface péri-phérique de la colonne,

$R_2$ est la plus grande distance entre la diode électroluminescente et la surface périphérique de la colonne,

d est la distance entre les diodes et la colonne,

x est la distance entre l'extrémité de la colonne au voisinage immédiat de la diode et la limite à laquelle est plongée la surface péri-phérique de la colonne,

$\theta_m$ est l'angle d'incidence critique à l'extrémité inférieure de la gamme d'angles prédé-terminée, et

$\theta_g$ est l'angle d'incidence critique à l'extrémité supérieure de la gamme d'angles prédé-terminée.

# Fig. 1

# Fig. 2

# Fig. 3

# Fig. 4

# Fig. 5

# Fig. 6

# Fig. 7

feedback compensation circuit

compensation circuit

final drive circuit

frequency divider circuit

drive circuit

multiplier circuit

voltage compensation circuit

Fig. 8

EP 0 281 337 B1

Fig.9

Fig.11

Fig.10

16

Fig. 12

Fig. 13

# Fig.14